# EUROPÄISCHE PATENTSCHRIFT

(11) **EP 3 830 946 B1**
(45) Veröffentlichungstag und Bekanntmachung des Hinweises auf die Patenterteilung: **20.09.2023**
(21) Anmeldenummer: 19748663.2
(22) Anmeldetag: 19.07.2019
(51) Int. Cl.: H02P 3/22, H02M 1/36, H02P 29/032, H02P 5/74, H02M 1/12, H02M 1/15, H02M 1/32, H02M 5/458

(54) **VERFAHREN ZUM BETREIBEN EINES ANTRIEBSSYSTEMS UND ANTRIEBSSYSTEM**
METHOD FOR OPERATING A DRIVE SYSTEM, AND DRIVE SYSTEM
PROCÉDÉ POUR FAIRE FONCTIONNER UN SYSTÈME D'ENTRAÎNEMENT ET SYSTÈME D'ENTRAÎNEMENT

(30) Priorität: 30.07.2018 DE 102018005932
(43) Veröffentlichungstag der Anmeldung: 09.06.2021
(73) Patentinhaber: SEW-EURODRIVE GmbH & Co. KG, 76646 Bruchsal (DE)
(72) Erfinder: WACKER, Maik, 76684 Östringen (DE); STARK, Marcel, 74909 Meckesheim (DE)
(86) Internationale Anmeldenummer: PCT/EP2019/025239
(87) Internationale Veröffentlichungsnummer: WO 2020/025164

(56) Entgegenhaltungen:
- EP-A1- 2 112 760
- EP-A1- 2 631 104
- US-A1- 2006 092 057
- US-A1- 2009 251 081

## Beschreibung

Die Erfindung betrifft ein Verfahren zum Betreiben eines Antriebssystems und ein Antriebssystem.

Es ist allgemein bekannt, dass ein Elektromotor generatorisch oder motorisch betreibbar ist und daher am gleichspannungsseitigen Anschluss eines den Elektromotor speisenden Wechselrichters die Spannung im generatorischen Betrieb ansteigt, wenn an diesem Anschluss ein Kondensator angeschlossen ist.

**Aus der** US 2009 / 251081 A1 **ist als nächstliegender Stand der Technik ein Elektromotor mit einer pulsweitenmoduliert betriebenen Bremse bekannt.**

**Aus der** EP 2 631 104 A1 **ist ein Gleichspannungsversorgung für parallel geschaltete Wechselrichter bekannt.**

**Aus der** EP 2 112 760 A1 **ist ein Verfahren zum Betreiben eines Bremschoppers bekannt.**

**Aus der** US 2006/092057 A1 **ist eine Linearitätskorrekur mit Filterprodukten bekannt.**

Der Erfindung liegt daher die Aufgabe zugrunde, ein Antriebssystem sicher zu betreiben.

Erfindungsgemäß wird die Aufgabe bei dem Verfahren zum Betreiben eines Antriebssystems nach den in Anspruch 1 und bei dem Antriebssystem nach den in Anspruch 12 angegebenen Merkmalen gelöst.

Wichtige Merkmale der Erfindung bei dem Verfahren zum Betreiben eines Antriebssystems, aufweisend einen Gleichrichter, zumindest einen Wechselrichter mit Elektromotor, sind, dass der Elektromotor am wechselspannungsseitigen Anschluss des Wechselrichters angeschlossen ist,
wobei der gleichspannungsseitige Anschluss des Wechselrichters über zumindest eine zur Leitungsinduktivität zusätzliche Induktivität mit dem gleichspannungsseitigen Anschluss des Gleichrichters verbunden ist,
wobei am gleichspannungsseitigen Anschluss des Wechselrichters und/oder am gleichspannungsseitigen Anschluss des Gleichrichters eine Kapazität angeschlossen ist, insbesondere ein nicht polarer Kondensator, insbesondere ein Folienkondensator,
wobei am gleichspannungsseitigen Anschluss des Wechselrichters und/oder am gleichspannungsseitigen Anschluss des Gleichrichters eine aus einem Widerstand und einem steuerbaren Halbleiterschalter, also Brems-Chopper, gebildete Reihenschaltung angeschlossen ist,
wobei der Brems-Chopper in derjenigen Zeitspanne, in welcher der Brems-Chopper betrieben wird, mit einer einzigen Frequenz f betrieben wird, insbesondere welche beabstandet ist von der Resonanzfrequenz des aus den Induktivitäten und der oder den Kapazitäten gebildeten Resonanzkreises.

Von Vorteil ist dabei, dass die Frequenz beabstandbar ist von einer Resonanzfrequenz des Antriebssystems. Somit ist die Anregung von Schwingungen vermeidbar und somit das Antriebssystem sicher, insbesondere spannungsmäßig sicher, betreibbar. Dies ist insbesondere dann vorteilhaft, wenn mehrere Wechselrichter gemeinsam aus einem Gleichspannungskreis, insbesondere Zwischenkreis, versorgt werden. Wichtig ist hierbei die Zusammenwirkung der Induktivitäten mit der oder den Kapazitäten zur Bildung einer eine Resonanzfrequenz aufweisenden Anordnung.

Erfindungsgemäß wird die die Reihenschaltung speisende Spannung, also Zwischenkreisspannung, insbesondere also die am gleichspannungsseitigen Anschluss des Wechselrichters anliegende Spannung, erfasst. Von Vorteil ist dabei, dass das Betreiben des Brems-Choppers spannungsabhängig ausführbar ist. Somit ist das Ansteuersignal für den Brems-Chopper von einer Steuerelektronik erzeugbar, wobei das Ansteuersignal einerseits von der Zwischenkreisspannung und andererseits von einer steuerbaren Zeitbasis abhängig erzeugbar ist.

Erfindungsgemäß wird der erfasste Wert der Spannung, also Zwischenkreisspannung digitalisiert und als digitaler serieller Datenstrom einerseits einem ersten digitalen Filter, insbesondere FIR-Filter, zugeführt und andererseits einem zweiten digitalen Filter, insbesondere FIR-Filter, zugeführt,
wobei das zweite digitale Filter relativ zum ersten digitalen Filter mit Zeitversatz gestartet wird,
insbesondere wobei der Zeitversatz eine halbe Filterlänge beträgt. Von Vorteil ist dabei, dass die Totzeit verringerbar ist, indem der digitale Datenstrom mit schnellerer Wiederholungsrate auswertbar ist.

Erfindungsgemäß werden die Ausgangssignale beider Filter jeweils einem Vergleichsmittel zum Vergleich mit dem ersten und dem zweiten Schwellwert zugeführt, wobei die Ausgangssignale der Vergleichsmittel mit einem von einer steuerbaren Zeitbasis, insbesondere von einem steuerbareren Taktgeber, erzeugten Signal logisch zur Erzeugung eines Ansteuersignals für den Brems-Chopper verknüpft werden. Von Vorteil ist dabei, dass eine spannungsabhängige Bedingung mit einer zeitabhängigen Bedingung verknüpfbar ist. Somit ist das Ansteuersignal für den Brems-Chopper derart erzeugbar, dass der Brems-Chopper immer dann mit einer, insbesondere einzigen, festen Frequenz betreibbar ist, wenn die Zwischenkreisspannung in dem dafür vorgesehenen Wertebereich liegt. Das Einhalten der zeitabhängigen Bedingung stellt sicher, dass der Brems-Chopper im Takt der Frequenz eingeschaltet wird und dass der Brems-Chopper im Takt der Frequenz ausgeschaltet wird. Das Betreiben steht dabei aber stets unter dem Vorbehalt, dass die Spannung in dem vorgesehenen Bereich liegt, da ansonsten der Brems-Chopper abgeschaltet bleibt.

Bei einer vorteilhaften Ausgestaltung wird der Brems-Chopper stets dann ausgeschaltet, wenn die Zwischenkreisspannung einen Schwellwert U2 unterschreitet. Von Vorteil ist dabei, dass die Zwischenkreisspannung somit nicht vom Brems-Chopper verursacht auf einen unbeabsichtigt niedrigen Wert absinkt.

Bei einer vorteilhaften Ausgestaltung wird der Brems-Chopper eingeschaltet, wenn die Zwischenkreisspannung einen ersten Schwellwert U1 überschreitet,
insbesondere und wenn entweder zuvor kein Einschalten stattgefunden hat oder das letzte zeitlich zuvor statt gefundene Einschalten mehr als eine vorgegebene Zeitdauer T zurückliegt,
wobei die Zeitdauer T dem Kehrwert der Frequenz f gleicht. Von Vorteil ist dabei, dass zwar nach Überschreiten von U1 der Brems-Chopper eingeschaltet wird, jedoch nur, wenn der Brems-Chopper zum ersten Mal oder nach einer Unterbrechung seines Betriebs wieder zeitbedingt eingeschaltet wird. Die Unterbrechung muss dabei aber länger angedauert haben als der Kehrwert der Frequenz und die Zwischenkreisspannung größer dem Schwellwert U2 sein.

Bei einer vorteilhaften Ausgestaltung ist die erste Schaltschwelle U1 größer als die zweite Schaltschwelle U2. Von Vorteil ist dabei, dass U1 als Einschaltschwelle und U2 als Ausschaltschwelle fungiert.

Bei einer vorteilhaften Ausgestaltung wird nach Einschalten des Brems-Choppers ein Ausschalten des Brems-Choppers nach, insbesondere spätestens, einem Zeitabstand, dessen Wert einem Produkt (q x T) aus einer Zeitdauer T und einem Faktor q gleicht, ausgeführt,
wobei der Faktor q einen Wert zwischen Null und Eins aufweist, insbesondere einen Wert aus dem Bereich zwischen 0,8 und 0,98 liegt.

Dies entspricht dem maximal andauernden Einschalten des Brems-Chopper innerhalb der Periode T. Dadurch wird ein Zwangs-Ausschalten erzwungen. Gleiches gilt entsprechend auch für den umgekehrten Fall, so dass die Zwangseinschalten, wenn vorher maximal ausgeschaltet.

Von Vorteil ist dabei, dass zur Einhaltung der Frequenz das Ausschalten auch dann erzwungen wird, wenn die Zwischenkreisspannung eigentlich derart hoch ist, dass die Zwischenkreisspannung abgesenkt werde sollte, also Energie des Zwischenkreises über den Brems-Chopper und den in Reihe geschalteten, als Bremswiderstand fungierende Widerstand in Wärme umgewandelt werden sollte. Somit ist es zwar ein Nachteil, den Brems-Chopper auf ein derartiges Einhalten der Frequenz festzulegen, jedoch wird somit das Anregen von Resonanzschwingungen verhindert. Der Brems-Chopper ist hierbei vorzugsweise an der Stellgrenze betreibbar. Er ist dann für maximal 0,98xT eingeschaltet und 0,02xT ausgeschaltet, anstelle von dauerhaften Einschalten. Dieser Verlust an Stellreserve ist in der Projektierung/Auslegung des Bremswiderstands berücksichtigt und stellt in Wirklichkeit keinen Nachteil dar!!!

Bei einer vorteilhaften Ausgestaltung ist der Kehrwert der Zeitdauer T größer als die Resonanzfrequenz des aus den Induktivitäten und der oder den Kapazitäten gebildeten Resonanzkreises. Von Vorteil ist dabei, dass eine Beabstandung der Frequenz von der Resonanzfrequenz ermöglicht ist, insbesondere um mehr als 40% des Wertes der Resonanzfrequenz.

Bei einer vorteilhaften Ausgestaltung wird der Brems-Chopper, wenn die Einschaltschwelle U1 zumindest einmal in der Vergangenheit überschritten oder erreicht worden war und die Zwischenkreisspannung U_ZK oberhalb U2 liegt, der Brems-Chopper ausgeschaltet, wenn der Zeitabstand zum zeitlich zuvor ausgeführten Ausschalten einen Zeitabstand, dessen Wert einem Produkt (p x T) aus einer Zeitdauer T und einem Faktor p gleicht, erreicht,
wobei der Faktor p einen Wert zwischen Null und Eins aufweist, insbesondere einen Wert aus dem Bereich zwischen 0,8 und 0,98 liegt. Von Vorteil ist dabei, dass der Brems-Chopper rechtzeitig ausgeschaltet wird, so dass die Frequenz noch eingehalten wird.

Bei einer vorteilhaften Ausgestaltung wird der Brems-Chopper, wenn die Einschaltschwelle U1 zumindest einmal in der Vergangenheit überschritten oder erreicht worden war und die Zwischenkreisspannung U_ZK oberhalb U2 liegt, eingeschaltet, wenn der Zeitabstand zum zeitlich zuvor ausgeführten Einschalten einen Zeitabstand, dessen Wert einem Produkt (q x T) aus einer Zeitdauer T und einem Faktor q gleicht, erreicht, wobei der Faktor q einen Wert zwischen Null und Eins aufweist, insbesondere einen Wert aus dem Bereich zwischen 0,8 und 0,98 liegt. Von Vorteil ist dabei, dass der Brems-Chopper rechtzeitig eingeschaltet wird, so dass die Frequenz noch eingehalten wird.

Bei einer vorteilhaften Ausgestaltung gleicht der Faktor q dem Faktor p. Von Vorteil ist dabei, dass Einschaltfrequenz und Ausschaltfrequenz gleich sind und somit keine Schwebefrequenzen und deren Oberschwingungen zusätzlich angeregt werden.

Bei einer vorteilhaften Ausgestaltung wird der erfasste Wert der Spannung, also Zwischenkreisspannung, erfasst, digitalisiert und als digitaler serieller Datenstrom einerseits einem ersten digitalen Filter, insbesondere FIR-Filter, zugeführt und wird andererseits einem zweiten digitalen Filter, insbesondere FIR-Filter, zugeführt,
wobei das zweite digitale Filter relativ zum ersten digitalen Filter mit Zeitversatz gestartet wird,
insbesondere wobei der Zeitversatz eine halbe Filterlänge beträgt. Von Vorteil ist dabei, dass das Überschreiten oder Unterschreiten der Schwellwerte schneller erkennbar ist.

Bei einer vorteilhaften Ausgestaltung werden die Ausgangssignale beider Filter jeweils einem Vergleichsmittel zum Vergleich mit dem ersten und dem zweiten Schwellwert zugeführt, wobei die Ausgangssignale der Vergleichsmittel mit einem von einer steuerbaren Zeitbasis, insbesondere von einem steuerbaren Taktgeber, erzeugten Signal logisch verknüpft werden zur Erzeugung eines Ansteuersignals für den Brems-Chopper. Von Vorteil ist dabei, dass die spannungsabhängige Bedingung mit einer zeitabhängigen Bedingung verknüpfbar ist.

Wichtige Merkmale bei dem Antriebssystem konfiguriert zur Ausführung eines vorgenannten Verfahrens sind, dass die zusätzliche Induktivität mindestens zehnmal, insbesondere mindestens hundertmal, größer als die Leitungsinduktivität ist. Von Vorteil ist dabei, dass die Resonanzfrequenz im Wesentlichen unabhängig von der Leitungsinduktivität ist. Auf diese Weise ist die zusätzliche Induktivität derart dimensionierbar, dass die Resonanzfrequenz in einem vorgegebenen Wertebereich liegt und die Frequenz zum Betreiben des Brems-Choppers genügend weit beabstandet ist von dieser Resonanzfrequenz.

Weitere Vorteile ergeben sich aus den Unteransprüchen.

Die Erfindung wird nun anhand von schematischen Abbildungen näher erläutert:
In der Figur 1 ist der Aufbau eines Umrichters mit Brems-Chopper schematisch skizziert.
In der Figur 2 ist ein erfindungsgemäßes Antriebssystem schematisch skizziert.
In der Figur 3 ist die zwischenkreisspannungsabhängige Erzeugung von Signalen dargestellt.
In der Figur 4 ist die abhängig von den Signalen ausgeführte Erzeugung des Ansteuersignals für den Brems-Chopper schematisch dargestellt.
In der Figur 5 ist der bei Nichtvorhandensein zusätzlicher Zwischenkreisinduktivitäten L aus Leitungsinduktivität und zwischenkreisseitigen Kapazitäten C_ZK gebildete Schwingkreis dargestellt.

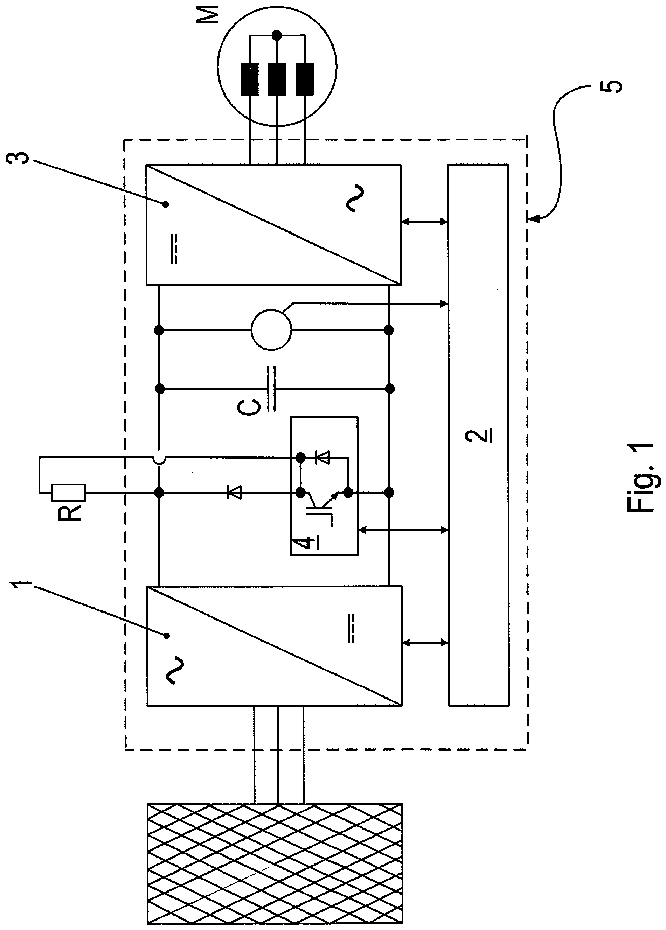

Wie in Figur 1 dargestellt, weist ein Umrichter einen Gleichrichter 1 auf, der auch als rückspeisefähiger Gleichrichter ausführbar ist. Gleichspannungsseitig ist am Gleichrichter 1 eine Kapazität C vorgesehen, welche allerdings nur als nicht-polarer Kondensator ausgeführt ist, insbesondere als Folienkondensator.

Die am Kondensator C anliegende Spannung wird erfasst und einer Signalelektronik 1 zugeführt, welche die Ansteuersignale für die in Halbbrücken angeordneten, steuerbaren Halbleiterschalter erzeugt.

Aus dem wechselspannungsseitigen Anschluss des Wechselrichters wird ein Elektromotor M, insbesondere Drehstrommotor, gespeist.

Die am Kondensator C anliegende Spannung wird dem gleichspannungsseitigen Anschluss des Wechselrichters zugeführt.

Zum Schutz gegen überhöhte Spannungen am Kondensator C, also zum Schutz gegen überhöhte Zwischenkreisspannung, ist eine Reihenschaltung aus einem Bremswiderstand R und einem steuerbaren Halbleiterschalter 4 vorgesehen, wobei Freilaufdioden ebenfalls vorgesehen sind.

Somit ist mit einem solchen Brems-Chopper Energie aus dem Zwischenkreis mittels des Bremswiderstandes, also eines im Wesentlichen als Ohm'scher Widerstand ausgeführten Bremswiderstands, in Wärme umwandelbar. Auf diese Weise sind überhöhte systemkritische Spannungswerte vermeidbar.

Das Ansteuersignal für den Halbleiterschalter 4 wird von der Signalelektronik 2 erzeugt, welcher auch die erfassten Zwischenkreisspannungswerte zugeführt werden.

Der Gleichrichter 1 ist mit seinem wechselspannungsseitigen Anschluss am Wechselspannungsversorgungsnetz angeschlossen.

Der Gleichrichter 1 ist auch als rückspeisefähiger AC/DC-Wandler ausführbar.

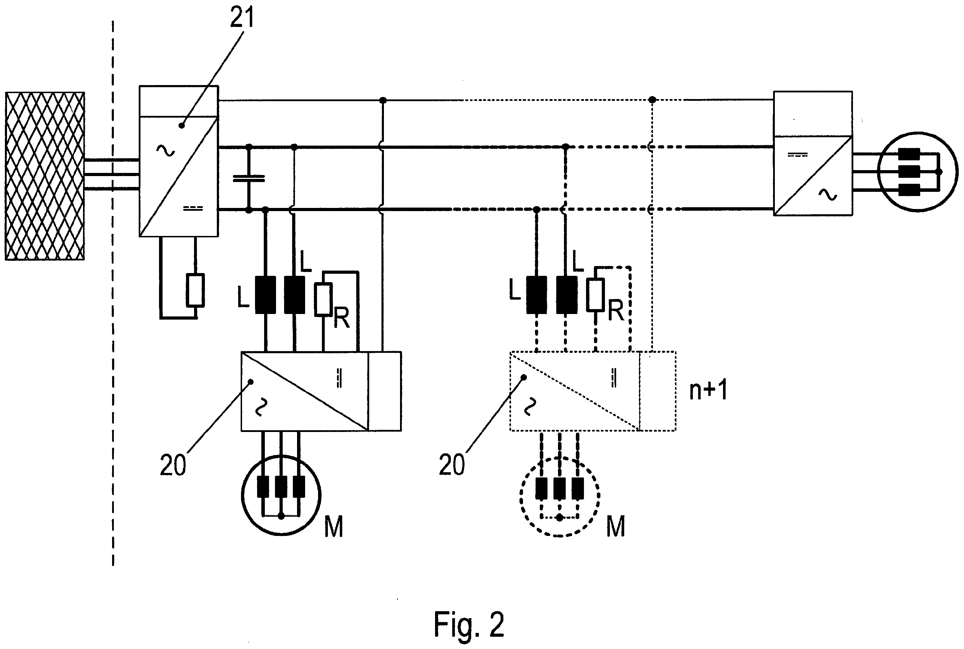

Wie in Figur 2 gezeigt, sind erfindungsgemäß mehreren Wechselrichtern über zusätzliche Induktivitäten L am Zwischenkreis anschließbar, so dass im motorischen Betrieb des vom jeweiligen Wechselrichter 20 gespeisten Elektromotors, insbesondere Drehstrommotors, dem Zwischenkreis Energie entzogen wird und im generatorischen Betrieb zugeführt wird.

Jedem Wechselrichter 20 ist auch ein Brems-Chopper mit Bremswiderstand R zugeordnet.

Die Kapazität C_ZK ist als nicht-polarer Kondensator, insbesondere als Folienkondensator ausführbar.

Zum sicheren Betrieb des Antriebssystems mit mehreren Wechselrichtern, muss aber nur ein einziger Bremswiderstand an einem Wechselrichter angeschlossen sein. Die Brems-Chopper der anderen Wechselrichter können geöffnet bleiben.

Alternativ ist in jedem Wechselrichter 20 an dessen jeweiligem gleichspannungsseitigen Anschluss jeweils eine Kapazität C_ZK angeschlossen, welcher jeweils eine Reihenschaltung aus einem jeweiligen steuerbaren Halbleiterschalter, insbesondere Brems-Chopper, und einem Widerstand, insbesondere Bremswiderstand, parallelgeschaltet ist.

Einerseits ist das obere Potential des gleichspannungsseitigen Anschlusses des Wechselrichters 20 über eine Induktivität L mit dem oberen Potential der Zwischenkreisspannung U_ZK verbunden. Andererseits ist das untere Potential des gleichspannungsseitigen Anschlusses des Wechselrichters 20 über eine Induktivität L mit dem unteren Potential der Zwischenkreisspannung U_ZK verbunden.

Die Zwischenkreisspannung wird wiederum mit einem netzgespeisten Gleichrichter 21 erzeugt, an dessen gleichspannungsseitigem Anschluss ein nicht-polarer Kondensator angeordnet ist.

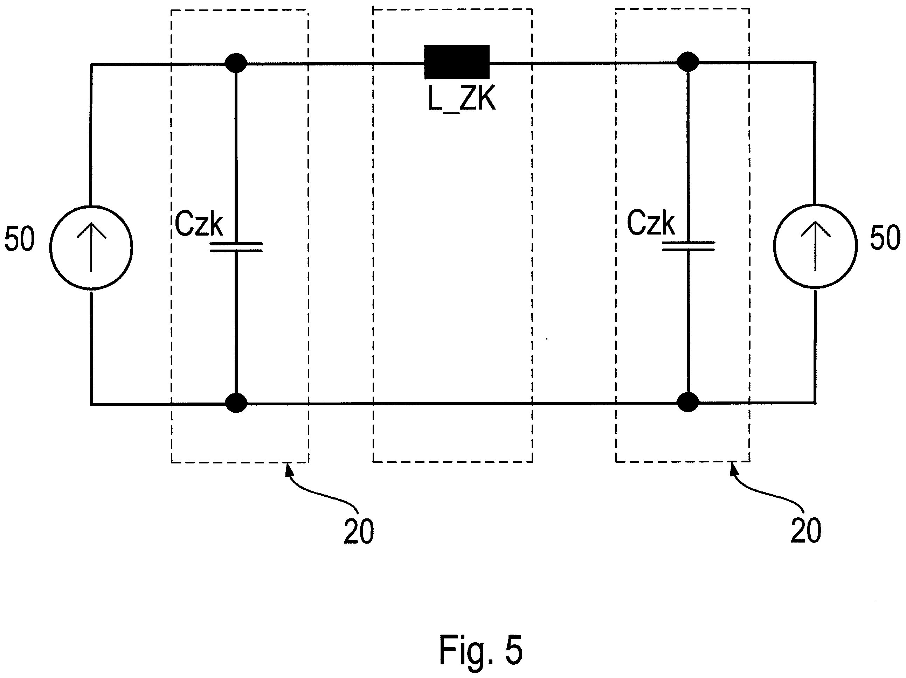

Wie in Figur 5 dargestellt, wären somit die Kapazitäten C_ZK der Wechselrichter über die Leitungsinduktivität L_ZK verbunden, wenn die zusätzlichen Induktivitäten nicht vorhanden wären. Somit würden von den Wechselrichtern 20 Anregungen 50 in das Antriebssystem eingebracht werden, die Schwingungen des aus den Kapazitäten C_ZK und der Leitungsinduktivität L_ZK gebildeten Schwingkreises anregen.

DA aber die in Figur 2 gezeigten Induktivitäten L zusätzlich vorhanden sind, welche mindestens zehnmal größer als die Leitungsinduktivitäten L_ZK des Zwischenkreises sind, ist die Resonanzfrequenz somit auf einen vorgesehenen Wertebereich, beispielsweise 2 kHz mit einer Abweichung von weniger als 10% genau, bringbar.

Erfindungsgemäß wird der Brems-Chopper mit einer Frequenz von 3 kHz, insbesondere bei einer Netzspannung von 400V bis 500V, betrieben, so dass der Brems-Chopper keine Schwingung des Resonanzkreises anregen kann. Da die Pulsweitenmodulationsfrequenzen der steuerbaren Halbleiterschalter der Wechselrichter ebenfalls mit einer Frequenz oberhalb des Wertebereichs, insbesondere mit 4kHz, 8 kHz oder 16 kHz, betrieben werden, können auch diese Wechselrichter keine Schwingung des Resonanzkreises anregen.

Bei geringerer Netzspannung, wie beispielsweise 200 Volt bis 240 Volt ist als Frequenz beispielhaft auch 5kHz wählbar.

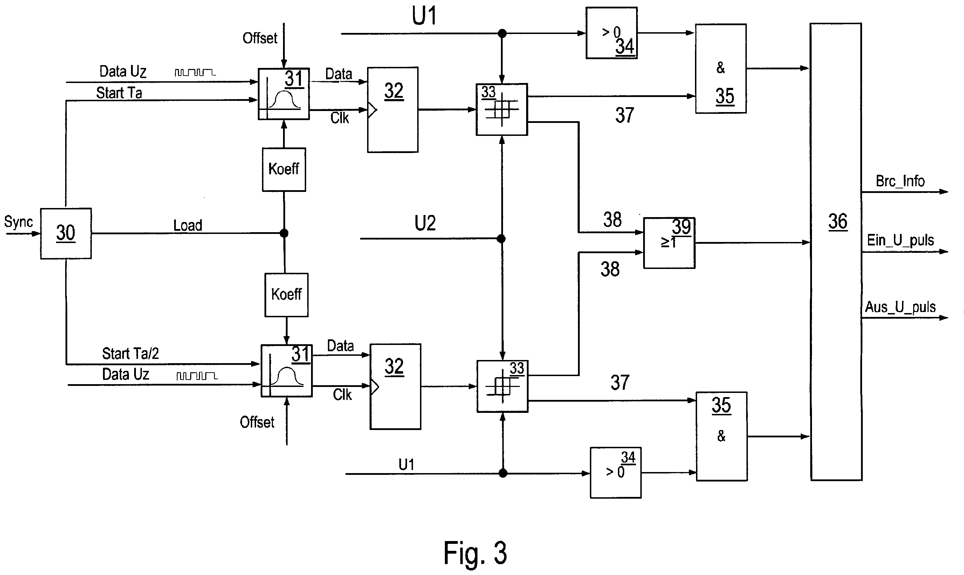

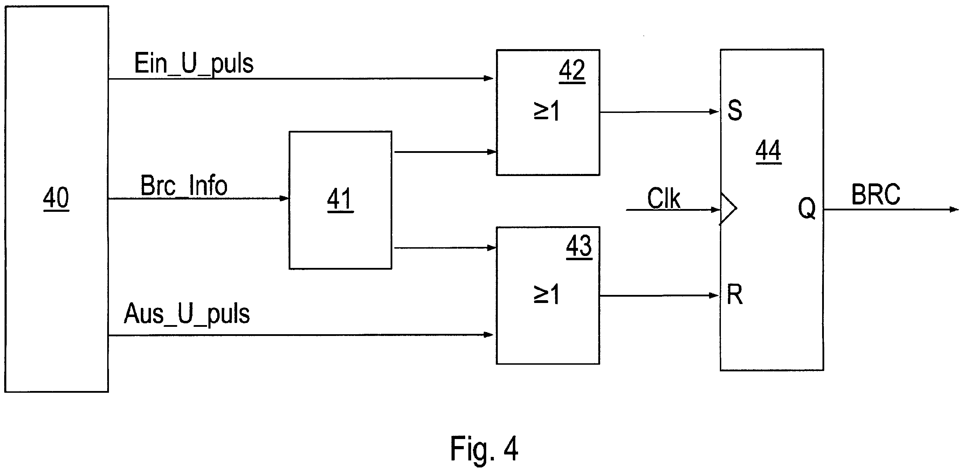

Die Betriebsweise und Betriebsbedingungen des Brems-Choppers sind in den Figuren 3 und 4 näher erläutert, wobei Figur 3 die spannungsabhängigen Bedingungen und Figur 4 die zeitabhängigen Bedingungen für das Ansteuern des Brems-Choppers schematisch darstellt.

Wie in Figur 3 dargestellt, wird die erfasste und mittels Delta-Sigma-Wandler in einen seriell digitalen Datenstrom verwandelte Zwischenkreisspannung zwei digitalen Filtern 31, insbesondere FIR-Filtern, zugeführt, deren jeweiliges Startsignal um eine halbe Filterlänge Ta/2 gegeneinander zeitlich versetzt sind. Die Startsignale werden von einer Zeitbasis 30 erzeugt, dem ein Synchronisationssignal Sync zugesendet wird.

Die digitalen Filter 31 wirken nach Art eines digitalen Tiefpasses, insbesondere also mit einer von der Frequenz fensterförmig abhängigen Dämpfungsstärke.

Das Ausgangssignal der Filter 31 wird jeweils einem jeweiligen Seriell-Parallel-Wandler 32 zugeführt, dessen digital paralleles Ausgangssignal jeweils einem jeweiligen Vergleicher 33 zugeführt wird, der das Ausgangssignal, also den erfassten jeweiligen Spannungswert mit einem ersten Schwellwert U1 vergleicht und mit einem zweiten Spannungswert U2.

Der erste Schwellwert U1 entspricht einer minimal benötigten Spannung, um ein Einschalten zu bewirken, wenn zuvor der Brems-Chopper ausgeschaltet war. Der zweite Schwellwert U2 markiert eine Spannung, bei deren Unterschreiten in jedem Fall der Brems-Chopper ausgeschaltet wird.

Das Ergebnis des Vergleichs mit dem ersten Schwellwert U1 wird jeweils auf einer Signalleitung 37 ausgegeben.

Das Ergebnis des Vergleichs mit dem zweiten Schwellwert U2 wird jeweils auf einer zweiten Signalleitung 38 ausgegeben, die zu einem Verknüpfungsmittel 39 geführt ist.

In einem Mittel zur Spannungsüberwachung 34 wird überprüft, ob der erste Schwellwerte U1 größer Null ist, Falls dies nicht so ist, wird bei Detektierung von negative Spannungen eine Abschaltung des Antriebssystems eingeleitet oder das Antriebssystem in einen sicheren Zustand gebracht.

Hierzu führt jeweils die erste Signalleitung 37 vom jeweiligen Vergleicher 33 zu einer jeweiligen UND-Verknüpfung 35 mit dem jeweiligen Ergebnis der Überwachung des ersten Schwellwertes U1, also mit dem Ausgangssignal des Mittels zur Spannungsüberwachung 34 zur Abschaltung bei Detektierung von negativen Spannungen.

Der Vergleicher 33 ist derart ausgeführt, dass er beim jeweiligen Vergleich jeweils eine Hysterese berücksichtigt.

Das Verknüpfungsmittel 39 verknüpft die beiden Signale auf beiden Signalleitungen 38 zu einer 2 Bit Information, welche als BRC_Info weitergeleitet wird. Dabei wird also die Information codiert, ob beide Signale Null sind oder ob zumindest eines der beiden Signale nicht Null ist oder ob beide Signale nicht Null sind. Somit ist codiert, ob die Zwischenkreisspannung größer als die Einschaltschwelle, kleiner also die Ausschaltschwelle oder zwischen den beiden Schwellwerten liegt.

Die Ausgangssignale der UND-Verknüpfungen 35 werden ebenso wie das Ausgangssignal des Verknüpfungsmittels 39 der Signalerzeugung 36 zugeführt. Dieses Mittel zur Signalerzeugung 36 stellt somit das obengenannte Signal BRC_Info und ein Signal Ein_U_puls, dass bei Überschreiten des Schwellwertes U1 gesetzt wird und bei Unterschreiten zurückgesetzt wird, bereit.

Durch die doppelte Spannungsverarbeitung mit zeitlichem Versatz von einer halben Filterzeit nach Figur 3 wird ein schnelleres Erkennen des Überschreitens oder Unterschreitens der Schwellwerte (U1, U2) ermöglicht.

Wie in Figur 4 gezeigt, wird das Signal BRC_Info einer Zeitbasis 41 zugeführt, dessen Ausgangssignale Verknüpfungsmitteln 42 und 43 zugeführt werden, deren Ausgangssignale einem Signalerzeugungsmittel 44 zugeführt werden.

Auf diese Weise ist gemäß Figur 3 und 4 eine Zeitbedingung und eine Spannungsbedingung bei der Erzeugung des Ansteuersignals BRC für den Brems-Chopper berücksichtigt.

Einerseits wird der Brems-Chopper eingeschaltet, wenn die Spannung über dem Schwellwert U1 liegt und ausgeschaltet, wenn er unter dem Schwellwert U2 liegt.

U2 ist dabei kleiner als U1.

Wenn also die Zwischenkreisspannung U_ZK von Null ansteigt, wird der Brems-Chopper erst dann eingeschaltet, wenn U1 überschritten wird. Sobald U2 unterschritten wird, wird in jedem Fall der Brems-Chopper ausgeschaltet.

Nach Einschalten des Brems-Choppers wird ein Ausschalten des Brems-Choppers nach spätestens einer Zeitdauer q x T ausgeführt, wobei
Die Zeitdauer T ist der Kehrwert der für den Brems-Chopper vorgegebenen Frequenz, insbesondere beispielshaft 3 kHz. Der Faktor q weist einen Wert zwischen Null und Eins auf und ist dabei vorzugsweise groß gewählt. Beispielsweise beträgt er 0,95.

Darüber hinaus, wenn die Einschaltschwelle U1 zumindest einmal in der Vergangenheit erreicht worden war und die Zwischenkreisspannung U_ZK oberhalb U2 noch liegt, wird der Brems-Chopper ausgeschaltet, wenn die Zeitdauer T erreicht wird, welche seitdem zeitlich zuvor ausgeführten Ausschalten abgelaufen ist, und der Brems-Chopper eingeschaltet, wenn die Zeitdauer T nach dem zeitlich zuvor ausgeführten Einschalten abgelaufen ist.

Effekt dieser Spannungsbedingungen und Zeitbedingungen ist, dass der Brems-Chopper auf jeden Fall mit der Frequenz f = 1/ T betrieben wird, wenn er betrieben wird. Ansonsten bleibt er ausgeschaltet.

Auf diese Weise ist somit keine ungewünschte Schwingung im Zwischenkreis anregbar durch den Betrieb des Brems-Choppers.

Auch wenn durch die endliche Betriebsdauer des Brems-Choppers rein theoretisch in der Fourieranalyse des zeitlichen Verlaufs verschiedene Frequenzen nicht verschwindende Amplituden aufweisen, ist jedoch der Energieeintrag bei der Resonanzfrequenz zu gering, um eine gefährliche oder ungewünschte Schwingung anzuregen.

Bei der Erfindung ergeben sich vorteilhafterweise ein robuster Betrieb des Antriebssystems mit mehreren gemeinsam gleichspannungsversorgten Wechselrichtern und die Vermeidung von Resonanzschwingungen und Resonanzerhöhungen. Außerdem ist eine Reduzierung der Belastung der Komponenten bewirkbar, da der Wechselspannungs-Anteil des Zwischenkreisstroms reduziert wird. Darüber hinaus ist keine Information über die aktuelle Zwischenkreiskapazität des Verbunds notwendig. Somit muss keine Regelung jeweils individuell parametriert werden. Auf diese Weise ist sogar eine Plug & Play Ausführung ermöglicht. Weiter vorteilhaft ist, dass nachträglich noch Wechselrichter hinzuschaltbar sind, ohne dass ein Umparametrieren des Systems erforderlich wäre. Die Hysterese des Brems-Chopper stellt sich automatisch durch die geschilderte Regelung richtig ein. Dazu ist aber auch die Anschlussstelle des Bremswiderstands an verschiedenen Postionien ausführbar.

### Bezugszeichenliste

1 Gleichrichter
2 Signalelektronik
3 Wechselrichter
4 steuerbarer Schalter, insbesondere Brems-Chopper
5 Umrichter
20 Wechselrichter
21 Gleichrichter
30 Zeitbasis
31 Filter, insbesondere digitaler Filter
32 Seriell-Parallel-Wandler
33 Vergleicher mit Hysterese
34 Spannungsüberwachung zur Abschaltung bei Detektierung von negativen Spannungen
35 UND-Verknüpfung
36 Signalerzeugung
37 erste Signalleitung
38 zweite Signalleitung
39 Verknüpfungsmittel
40 Spannungsabhängige Logik
41 steuerbare Zeitbasis, insbesondere steuerbarer Zähler
42 Verknüpfungsmittel
43 Verknüpfungsmittel
44 Signalerzeugungsmittel
50 Anregung
Clk Taktsignal
BRC Ansteuersignal für steuerbaren Halbleiterschalter, insbesondere Brems-Chopper
BRC_Info Eingangssignal für Zeitbasis 41
Ein_U_puls Einschaltsignal
Aus_U_puls Ausschaltsignal
Sync Synchronisationssignal
Load Ladesignal
Koeff Koeffizienten
Data Clock Taktsignal
U1 Einschaltschwelle
U2 Ausschaltschwelle
R Bremswiderstand
M Elektromotor
C Kondensator
L Induktivität
L_ZK Leitungsinduktivität
C_ZK zwischenkreisseitige Kapazität des jeweiligen Wechselrichters

## Patentansprüche

1. Verfahren zum Betreiben eines Antriebssystems, aufweisend einen Gleichrichter (1, 21), zumindest einen Wechselrichter (3, 20) mit Elektromotor,
wobei der Elektromotor am wechselspannungsseitigen Anschluss des Wechselrichters (3, 20) angeschlossen ist,
wobei der gleichspannungsseitige Anschluss des Wechselrichters (3, 20) über zumindest eine zur Leitungsinduktivität zusätzliche Induktivität mit dem gleichspannungsseitigen Anschuss des Gleichrichters (1, 21) verbunden ist,
wobei am gleichspannungsseitigen Anschluss des Wechselrichters (3, 20) und/oder am gleichspannungsseitigen Anschluss des Gleichrichters (1, 21) eine Kapazität angeschlossen ist, insbesondere ein nicht polarer Kondensator, insbesondere ein Folienkondensator,
wobei am gleichspannungsseitigen Anschluss des Wechselrichters (3, 20) und/oder am gleichspannungsseitigen Anschluss des Gleichrichters (1, 21) eine aus einem Widerstand und einem steuerbaren Halbleiterschalter, also Brems-Chopper (4), gebildete Reihenschaltung angeschlossen ist,
**wobei** der Brems-Chopper (4) in derjenigen Zeitspanne, in welcher der Brems-Chopper (4) betrieben wird, mit einer einzigen Frequenz f betrieben wird,
**wobei die die Reihenschaltung speisende Spannung, also Zwischenkreisspannung, insbesondere also die am gleichspannungsseitigen Anschluss des Wechselrichters (3, 20) anliegende Spannung, erfasst wird,**
**dadurch gekennzeichnet, dass**
**der erfasste Wert der Spannung, also Zwischenkreisspannung, als digitaler serieller Datenstrom einerseits einem ersten digitalen Filter (31), insbesondere FIR-Filter, zugeführt wird und andererseits einem zweiten digitalen Filter (31), insbesondere FIR-Filter, zugeführt wird,**
**wobei das zweite digitale Filter (31) relativ zum ersten digitalen Filter (31) mit Zeitversatz gestartet wird,**
**wobei die Ausgangssignale beider Filter (31) jeweils einem Vergleichsmittel zum Vergleich mit einem ersten und einem zweiten Schwellwert zugeführt werden,**
**wobei die Ausgangssignale der Vergleichsmittel mit einem von einer steuerbaren Zeitbasis, insbesondere von einem steuerbaren Taktgeber, erzeugten Signal logisch verknüpft werden zur Erzeugung eines Ansteuersignals für den Brems-Chopper (4).**

2. Verfahren nach Anspruch 1,
**dadurch gekennzeichnet, dass**
**die Frequenz f beabstandet ist von der Resonanzfrequenz des aus den Induktivitäten und der oder den Kapazitäten gebildeten Resonanzkreises.**

3. Verfahren nach mindestens einem der vorangegangenen Ansprüche,
**dadurch gekennzeichnet, dass**
**der Zeitversatz eine halbe Filterlänge beträgt.**

4. Verfahren nach mindestens einem der vorangegangenen Ansprüche,
**dadurch gekennzeichnet, dass**
der Brems-Chopper (4) stets dann ausgeschaltet wird, wenn die Zwischenkreisspannung einen Schwellwert U2 unterschreitet.

5. Verfahren nach mindestens einem der vorangegangenen Ansprüche,
**dadurch gekennzeichnet, dass**
der Brems-Chopper (4) eingeschaltet wird, wenn die Zwischenkreisspannung einen ersten Schwellwert U1 überschreitet,
insbesondere und wenn entweder zuvor kein Einschalten stattgefunden hat oder das letzte zeitlich zuvor statt gefundene Einschalten mehr als eine vorgegebene Zeitdauer T zurückliegt,
wobei die Zeitdauer T dem Kehrwert der Frequenz f gleicht.

6. Verfahren nach mindestens einem der vorangegangenen Ansprüche,
**dadurch gekennzeichnet, dass**
die erste Schaltschwelle U1 größer als die zweite Schaltschwelle U2 ist.

7. Verfahren nach mindestens einem der vorangegangenen Ansprüche,
**dadurch gekennzeichnet, dass**
nach Einschalten des Brems-Choppers (4) ein Ausschalten des Brems-Choppers (4) nach, insbesondere spätestens, einem Zeitabstand, dessen Wert einem Produkt (q x T) aus einer **zweiten** Zeitdauer T und einem Faktor q gleicht, ausgeführt wird,
wobei der Faktor q einen Wert zwischen Null und Eins aufweist, insbesondere einen Wert aus dem Bereich zwischen 0,8 und 0,98 liegt.

8. Verfahren nach mindestens einem der vorangegangenen Ansprüche,
**dadurch gekennzeichnet, dass**
der Kehrwert der **zweiten** Zeitdauer T größer ist als die Resonanzfrequenz des aus den Induktivitäten und der oder den Kapazitäten gebildeten Resonanzkreises.

9. Verfahren nach mindestens einem der vorangegangenen Ansprüche,
**dadurch gekennzeichnet, dass**
der Brems-Chopper (4), wenn die Einschaltschwelle U1 zumindest einmal in der Vergangenheit überschritten oder erreicht worden war und die Zwischenkreisspannung U_ZK oberhalb U2 liegt, ausgeschaltet wird, wenn der Zeitabstand zum zeitlich zuvor ausgeführten Ausschalten einen Zeitabstand, dessen Wert einem Produkt aus einer **dritten** Zeitdauer T und einem Faktor p gleicht, erreicht,
wobei der Faktor p einen Wert zwischen Null und Eins aufweist, insbesondere einen Wert aus dem Bereich zwischen 0,8 und 0,98 liegt.

10. Verfahren nach mindestens einem der vorangegangenen Ansprüche,
**dadurch gekennzeichnet, dass**
der Brems-Chopper (4), wenn die Einschaltschwelle U1 zumindest einmal in der Vergangenheit überschritten oder erreicht worden war und die Zwischenkreisspannung U_ZK oberhalb U2 liegt, eingeschaltet wird, wenn der Zeitabstand zum zeitlich zuvor ausgeführten Einschalten einen Zeitabstand, dessen Wert einem Produkt aus einer Zeitdauer T und einem Faktor q gleicht, erreicht,
wobei der Faktor q einen Wert zwischen Null und Eins aufweist, insbesondere einen Wert aus dem Bereich zwischen 0,8 und 0,98 liegt.

11. Verfahren nach mindestens einem der vorangegangenen Ansprüche,
**dadurch gekennzeichnet, dass**
der Faktor q dem Faktor p gleicht.

12. Antriebssystem, **konfiguriert zur Ausführung der Verfahrensschritte** eines Verfahrens nach mindestens einem der vorangegangenen Ansprüche,
**wobei das Antriebssystem einen Gleichrichter (1, 21) und zumindest einen Wechselrichter (3, 20) mit Elektromotor aufweist,**
**wobei der Elektromotor am wechselspannungsseitigen Anschluss des Wechselrichters (3, 20) angeschlossen ist,**
**wobei der gleichspannungsseitige Anschluss des Wechselrichters (3, 20) über zumindest eine zur Leitungsinduktivität zusätzliche Induktivität mit dem gleichspannungsseitigen Anschuss des Gleichrichters (1, 21) verbunden ist,**
**wobei am gleichspannungsseitigen Anschluss des Wechselrichters (3, 20) und/oder am gleichspannungsseitigen Anschluss des Gleichrichters (1, 21) eine Kapazität angeschlossen ist, insbesondere ein nicht polarer Kondensator, insbesondere ein Folienkondensator,**
**wobei am gleichspannungsseitigen Anschluss des Wechselrichters (3, 20) und/oder am gleichspannungsseitigen Anschluss des Gleichrichters (1, 21) eine aus einem Widerstand und einem steuerbaren Halbleiterschalter, also Brems-Chopper (4), gebildete Reihenschaltung angeschlossen ist,**
**wobei der Brems-Chopper (4) in derjenigen Zeitspanne, in welcher der Brems-Chopper (4) betrieben wird, mit einer einzigen Frequenz f betrieben wird,**
**wobei die die Reihenschaltung speisende Spannung, also Zwischenkreisspannung, insbesondere also die am gleichspannungsseitigen Anschluss des Wechselrichters (3, 20) anliegende Spannung, erfasst wird,**
wobei die zusätzliche Induktivität mindestens zehnmal, insbesondere mindestens hundertmal, größer als die Leitungsinduktivität ist.

## Claims

1. Method for operating a drive system comprising a rectifier (1, 21) and at least one inverter (3, 20) having an electric motor,
wherein the electric motor is connected to the AC voltage-side terminal of the inverter (3, 20),
wherein the DC voltage-side terminal of the inverter (3, 20) is connected to the DC voltage-side terminal of the rectifier (1, 21) by means of at least one inductor provided in addition to the line inductor,
wherein a capacitor, in particular a non-polar capacitor, in particular a film capacitor, is connected to the DC voltage-side terminal of the inverter (3, 20) and/or to the DC voltage-side terminal of the rectifier (1, 21),
wherein a series circuit formed from a resistor and a controllable semiconductor switch, i.e. a brake chopper (4), is connected to the DC voltage-side terminal of the inverter (3, 20) and/or to the DC voltage-side terminal of the rectifier (1, 21),
wherein the brake chopper (4) is operated at a single frequency f in the same time period in which the brake chopper (4) is operated,
wherein the voltage feeding the series circuit, i.e. the DC link voltage, in particular therefore the voltage applied to the DC voltage-side terminal of the inverter (3, 20), is detected,
**characterised in that**
the detected value of the voltage, i.e. the DC link voltage, is supplied as a digital serial data stream both to a first digital filter (31), in particular an FIR filter, and to a second digital filter (31), in particular an FIR filter,
wherein the second digital filter (31) is started up with a time lag relative to the first digital filter (31),
wherein the output signals of both filters (31) are supplied to respective comparison means to be compared with a first and a second threshold value,
wherein the output signals of the comparison means are logically gated to a signal generated by a controllable time base, in particular by a controllable clock generator, in order to generate an actuation signal for the brake chopper (4).

2. Method according to claim 1,
**characterised in that**
the frequency f is spaced apart from the resonant frequency of the resonant circuit formed from the inductors and the capacitor(s).

3. Method according to at least one of the preceding claims,
**characterised in that**
the time lag is half a filter length.

4. Method according to at least one of the preceding claims,
**characterised in that**
the brake chopper (4) is deactivated whenever the DC link voltage drops below a threshold value U2.

5. Method according to at least one of the preceding claims,
**characterised in that**
the brake chopper (4) is activated when the DC link voltage exceeds a first threshold value U1,
in particular and when either it has not been activated previously or the most recent activation took place more than a predetermined length of time T ago,
wherein the length of time T is equal to the inverse of the frequency f.

6. Method according to at least one of the preceding claims,
**characterised in that**
the first switching threshold U1 is greater than the second switching threshold U2.

7. Method according to at least one of the preceding claims,
**characterised in that**
once the brake chopper (4) has been activated, the brake chopper (4) is deactivated after, in particular at the latest after, a time interval whose value is equal to a product of a second length of time T and a factor q,
wherein the factor q has a value between zero and one, in particular a value from the range between 0.8 and 0.98.

8. Method according to at least one of the preceding claims,
**characterised in that**
the inverse of the second length of time T is greater than the resonant frequency of the resonant circuit formed from the inductors and the capacitor(s).

9. Method according to at least one of the preceding claims,
**characterised in that**
if the activation threshold U1 has been exceeded or reached at least once in the past and the DC link voltage U_ZK is above U2, the brake chopper (4) is deactivated if the time interval from the previous deactivation reaches a time interval whose value is equal to a product of a third length of time T and a factor p,
wherein the factor p has a value between zero and one, in particular a value from the range between 0.8 and 0.98.

10. Method according to at least one of the preceding claims,
**characterised in that**
if the activation threshold U1 has been exceeded or reached at least once in the past and the DC link voltage U_ZK is above U2, the brake chopper (4) is activated if the time interval from the previous activation reaches a time interval whose value is equal to a product of a length of time T and a factor q,
wherein the factor q has a value between zero and one, in particular a value from the range between 0.8 and 0.98.

11. Method according to at least one of the preceding claims,
**characterised in that**
the factor q is equal to the factor p.

12. Drive system configured for carrying out the method steps of a method according to at least one of the preceding claims,
wherein the drive system comprises a rectifier (1, 21) and at least one inverter (3, 20) having an electric motor,
wherein the electric motor is connected to the AC voltage-side terminal of the inverter (3, 20),
wherein the DC voltage-side terminal of the inverter (3, 20) is connected to the DC voltage-side terminal of the rectifier (1, 21) by means of at least one inductor provided in addition to the line inductor,
wherein a capacitor, in particular a non-polar capacitor, in particular a film capacitor, is connected to the DC voltage-side terminal of the inverter (3, 20) and/or to the DC voltage-side terminal of the rectifier (1, 21),
wherein a series circuit formed from a resistor and a controllable semiconductor switch, i.e. a brake chopper (4), is connected to the DC voltage-side terminal of the inverter (3, 20) and/or to the DC voltage-side terminal of the rectifier (1, 21),
wherein the brake chopper (4) is operated at a single frequency f in the same time period in which the brake chopper (4) is operated,
wherein the voltage feeding the series circuit, i.e. the DC link voltage, in particular therefore the voltage applied to the DC voltage-side terminal of the inverter (3, 20), is detected, wherein the additional inductance is at least ten times, in particular at least one hundred times, greater than the line inductance.

## Revendications

1. Procédé d'exploitation d'un système d'entraînement comprenant un redresseur (1, 21) et au moins un onduleur (3, 20) muni d'un moteur électrique,
lequel moteur électrique est raccordé à la connexion dudit onduleur (3, 20) située côté tension alternative,
la connexion, située côté tension continue dudit onduleur (3, 20), étant raccordée à la connexion dudit redresseur (1, 21), située côté tension continue, par l'intermédiaire d'au moins une inductance ajoutée à l'inductance de ligne,
sachant qu'une capacité, en particulier un condensateur non polaire et notamment un condensateur à film, est raccordé(e) à la connexion située côté tension continue de l'onduleur (3, 20), et/ou à la connexion située côté tension continue du redresseur (1, 21), sachant qu'un branchement en série constitué d'une résistance et d'un interrupteur commandable à semi-conducteur, c'est-à-dire d'un hacheur de freinage (4), est raccordé à ladite connexion située côté tension continue de l'onduleur (3, 20), et/ou à ladite connexion située côté tension continue du redresseur (1, 21),
lequel hacheur de freinage (4) est actionné avec une fréquence unique f pendant le laps de temps au cours duquel ledit hacheur de freinage (4) est en action,
sachant qu'il s'opère une détection de la tension alimentant ledit branchement en série, c'est-à-dire de la tension de circuit intermédiaire et donc, en particulier, de la tension appliquée à ladite connexion située côté tension continue de l'onduleur (3, 20),
**caractérisé par le fait que**
la valeur détectée de la tension, c'est-à-dire de la tension de circuit intermédiaire, est délivrée d'une part à un premier filtre numérique (31), notamment à un filtre FIR, en tant que flux de données sérielles numériques, et est d'autre part délivrée à un second filtre numérique (31), notamment à un filtre FIR,
lequel second filtre numérique (31) est démarré avec décalage temporel par rapport audit premier filtre numérique (31),
les signaux de sortie des deux filtres (31) étant appliqués à un moyen comparateur respectif, affecté à la comparaison avec des première et seconde valeurs de seuil,
les signaux de sortie des moyens comparateurs étant combinés logiquement à un signal engendré par une base temporelle commandable, en particulier un générateur de cadencement commandable, en vue d'engendrer un signal de pilotage dévolu au hacheur de freinage (4).

2. Procédé selon la revendication 1,
**caractérisé par le fait que**
la fréquence f est éloignée de la fréquence de résonance du circuit résonant formé par les inductances et par la, ou les capacité(s).

3. Procédé selon au moins l'une des revendications précédentes,
**caractérisé par le fait que**
le décalage temporel représente une demi-longueur de filtre.

4. Procédé selon au moins l'une des revendications précédentes,
**caractérisé par le fait que**
le hacheur de freinage (4) est désactivé, en permanence, lorsque la tension de circuit intermédiaire se situe en deçà d'une valeur de seuil U2.

5. Procédé selon au moins l'une des revendications précédentes,
**caractérisé par le fait que**
le hacheur de freinage (4) est activé lorsque la tension de circuit intermédiaire excède une première valeur de seuil U1,
en particulier lorsqu'aucune activation n'a eu lieu auparavant, ou bien lorsque la dernière activation, préalablement effectuée dans le temps, remonte à plus d'une durée T préétablie,
laquelle durée T est égale à la valeur inverse de la fréquence f.

6. Procédé selon au moins l'une des revendications précédentes,
**caractérisé par le fait que**
le premier seuil de commutation U1 est supérieur au second seuil de commutation U2.

7. Procédé selon au moins l'une des revendications précédentes,
**caractérisé par le fait que**,
postérieurement à une activation du hacheur de freinage (4), une désactivation dudit hacheur de freinage (4) est effectuée après, notamment au plus tard après un intervalle de temps dont la valeur est égale à un produit d'une deuxième durée T et d'un facteur q, lequel facteur q présente une valeur comprise entre zéro et un, en particulier une valeur émanant de la plage comprise entre 0,8 et 0,98.

8. Procédé selon au moins l'une des revendications précédentes,
**caractérisé par le fait que**
la valeur inverse de la deuxième durée T est supérieure à la fréquence de résonance du circuit résonant formé par les inductances et par la, ou les capacité(s).

9. Procédé selon au moins l'une des revendications précédentes,
**caractérisé par le fait que**,
si le seuil d'activation U1 avait été excédé ou atteint au moins une fois, par le passé, et si la tension U_ZK du circuit intermédiaire se situe au-delà de U2, le hacheur de freinage (4) est désactivé lorsque l'intervalle de temps, vis-à-vis de la désactivation effectuée avec antériorité temporelle, atteint un intervalle de temps dont la valeur est égale à un produit d'une troisième durée T et d'un facteur p,
lequel facteur p présente une valeur comprise entre zéro et un, en particulier une valeur émanant de la plage comprise entre 0,8 et 0,98.

10. Procédé selon au moins l'une des revendications précédentes,
**caractérisé par le fait que**,
si le seuil d'activation U1 avait été excédé ou atteint au moins une fois, par le passé, et si la tension U_ZK du circuit intermédiaire se situe au-delà de U2, le hacheur de freinage (4) est activé lorsque l'intervalle de temps, vis-à-vis de l'activation effectuée avec antériorité temporelle, atteint un intervalle de temps dont la valeur est égale à un produit d'une durée T et d'un facteur q,
lequel facteur q présente une valeur comprise entre zéro et un, en particulier une valeur émanant de la plage comprise entre 0,8 et 0,98.

11. Procédé selon au moins l'une des revendications précédentes,
**caractérisé par le fait que**
le facteur q est égal au facteur p.

12. Système d'entraînement configuré en vue de l'exécution des étapes opératoires d'un procédé conforme à au moins l'une des revendications précédentes,
ledit système d'entraînement comprenant un redresseur (1, 21) et au moins un onduleur (3, 20) muni d'un moteur électrique,
lequel moteur électrique est raccordé à la connexion dudit onduleur (3, 20) située côté tension alternative,
la connexion, située côté tension continue dudit onduleur (3, 20), étant raccordée à la connexion dudit redresseur (1, 21), située côté tension continue, par l'intermédiaire d'au moins une inductance ajoutée à l'inductance de ligne,
sachant qu'une capacité, en particulier un condensateur non polaire et notamment un condensateur à film, est raccordé(e) à la connexion située côté tension continue de l'onduleur (3, 20), et/ou à la connexion située côté tension continue du redresseur (1, 21), sachant qu'un branchement en série constitué d'une résistance et d'un interrupteur commandable à semi-conducteur, c'est-à-dire d'un hacheur de freinage (4), est raccordé à ladite connexion située côté tension continue de l'onduleur (3, 20), et/ou à ladite connexion située côté tension continue du redresseur (1, 21),
lequel hacheur de freinage (4) est actionné avec une fréquence unique f pendant le laps de temps au cours duquel ledit hacheur de freinage (4) est en action,
sachant qu'il s'opère une détection de la tension alimentant ledit branchement en série, c'est-à-dire de la tension de circuit intermédiaire et donc, en particulier, de la tension appliquée à ladite connexion située côté tension continue de l'onduleur (3, 20),
sachant que l'inductance ajoutée est au moins dix fois, en particulier au moins cent fois supérieure à l'inductance de ligne.
